# EUROPEAN PATENT SPECIFICATION

(11) **EP 2 001 568 B1**
(45) Date of publication and mention of the grant of the patent: **24.06.2015**
(21) Application number: 07753387.5
(22) Date of filing: 19.03.2007
(51) Int. Cl.: A63F 13/30, G06F 3/0482

(54) **METHODS AND DEVICES FOR QUICKLY LAUNCHING APPLICATIONS**
VERFAHREN UND VORRICHTUNGEN ZUM SCHNELLEN STARTEN VON ANWENDUNGEN
PROCEDES ET DISPOSITIFS POUR LANCER RAPIDEMENT DES APPLICATIONS

(30) Priority: 31.03.2006 US 393886
(43) Date of publication of application: 17.12.2008
(73) Proprietor: ALCATEL LUCENT, 92100 Boulogne-Billancourt (FR)
(72) Inventor: CHANDRANMENON, Girish, P., Edison, NJ 08817 (US); HAO, Fang, Morganville, NJ 07751 (US); MILLER, Scott, C., Freehold, NJ 07728 (US); MUKHERJEE, Sarit, Morganville, NJ 07751 (US); NAIK, Tejas, Edison, NJ 08820 (US)
(74) Representative: Wetzel, Emmanuelle
(86) International application number: PCT/US2007/006754
(87) International publication number: WO 2007/120421

(56) References cited:
- EP-A1- 1 570 887
- WO-A-2005/018764
- WO-A1-2005/028056
- US-A1- 2002 086 732

## Description

### BACKGROUND OF THE INVENTION

Currently, a number of devices are available that enable an individual (sometimes referred to herein as a "user") to conduct communication sessions with another user in order to carry out a conversation, send a message, or play an on-line game. When the device is a wireless device, it is typically the size of someone's hand or smaller. Such relatively small "handsets" do not have big displays or screens. Thus, little content can be displayed at one time. This forces these handsets to include applications that require their users to scroll through multiple levels of menus and the like.

Typically a user must scroll or navigate through several levels of menus to select a means of communicating with another user, or to access an application, such as an on-line game. For example, some existing devices require a user to select a particular game from one menu, a particular skill level from another and then use a third menu to enter a "lobby" to find other users/players or so-called "buddies" (i.e., those individuals a user plays games with most often) who are interested in playing a game with the user. After scrolling or otherwise navigating through such multiple menus the user must still access a final menu or the like to make one more selection in order to launch (i.e., begin) an on-line game session.

Requiring a user to scroll or otherwise navigate through multiple levels takes time and is sometimes frustrating for the user. Therefore, it is desirable to provide methods and devices which provide more intuitive menus. Such menus should reduce the complexity of selecting and launching an application. For example, such menus should enable a user to more quickly launch and play an on-line game or another application.

Co-pending U.S. Patent Application No. , incorporated by reference in full herein as if set forth in full herein, discloses methods and devices which enable communication sessions to be conducted between users more quickly and with greatly reduced airlink time/bandwidth than previously thought possible. In general, the methods and devices discussed in the co-pending Application just mentioned are known as "always-on" methods and devices because even when a user of a device is inactive (e.g., her device is powered-off) an always-on agent may act as a proxy and continue to act on behalf of the user/user's device during a given communication session.

One of the advantages provided by the architectures set forth in the co-pending Application mentioned above 1 is that they can be used to quickly launch applications. The present invention is aimed at methods and devices for doing just so.

### SUMMARY OF THE INVENTION

U.S. Patent Application Publication No. 2002/0086732 discloses a game server for use in connection with a messenger server.

Document EP 1 570 887 A1 describes a method for online game matchmaking using play style information. WO 2005/028056 A1 teaches a gaming system where games offered for selection are ordered according to a ranking determined as a function of a player's past history of playing games and a history of games played by other players.

The present invention provides methods and devices that enables users to quickly launch an application, such as an on-line game. One such device presents (e.g., displays) at least one indicator representing individuals presently available to become involved in a communication session with a user. Other indicators may also be presented, such as: an indicator(s) that represents a group of

individuals that are presently available to play a game with the user; an indicator(s) that represents individuals the user plays games with most often; and an indicator(s) that represents games the user plays most often. These, and other indicators, enable a user to quickly launch an application without having to navigate through multiple levels of menus.

### BRIEF DESCRIPTION OF THE DRAWINGS

Fig. 1 depicts a block diagram illustrating an architecture that makes it possible to quickly launch applications in accordance with one embodiment of the invention.
Figs. 2 and 3 depict examples of a handset that is capable of generating intuitive menus to quickly launch an application and provide a so-called "one touch" operation in accordance with embodiments of the present invention.

### DERAILED DESCRIPTION OF THE INVENTION, WITH EXAMPLES

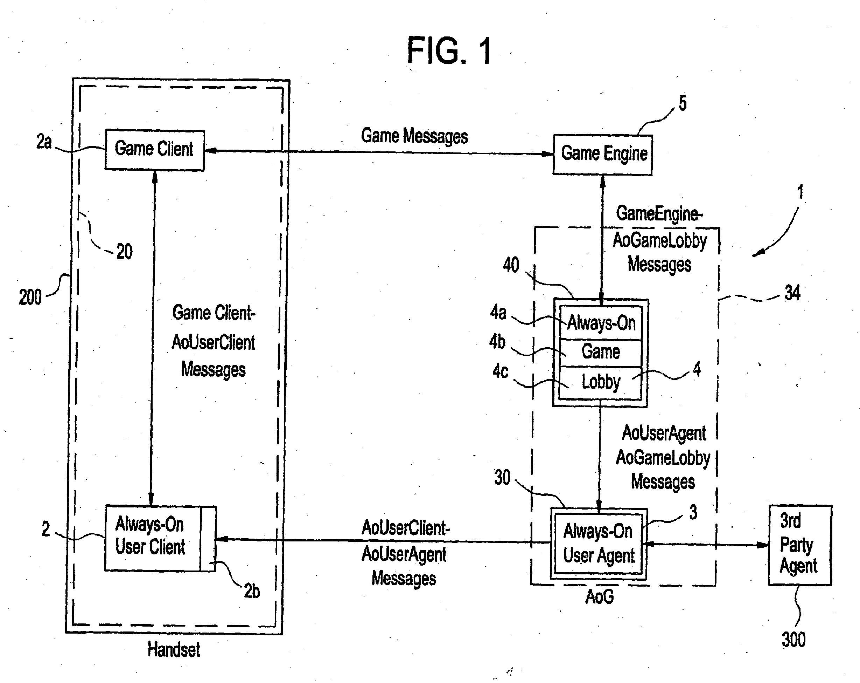

Referring now to Fig. 1 there is shown an architecture 1 which comprises an always-on client 2 ("client"), applications client 2a (e.g., game client), always-on proxy agent 3 ("agent"), always-on lobby 4 ("lobby"), an applications engine/server 5 (e.g., game server) and another third party agent 300. Besides hardware implementations, the client 2 and applications client 2a may also comprise one or more software or firmware programs/applications that may be co-located and stored on a computer readable medium 20 of some sort which may be, in turn, embedded within a larger device 200, such as a wired or wireless telephone, personal digital assistant (PDA), computer, gaming device, or a device which combines one or more functions (e.g., email and voice messaging), etc... Alternatively, the client 2 and applications client 2a may be stored on more than one medium or stored on separate mediums. Likewise the agent 3 and lobby 4 may also comprise one or more applications and may also be stored on some kind of computer readable medium 30, 40, respectively, that are also part of one or more wired or wireless larger devices, such as a server 34 or the like. Though shown as one component 34, it should be understood that the agent 3 and lobby 4 may be separate units and need not be co-located. When stored on one or more mediums, the programs/applications may comprise code that controls the features and functions of a particular component shown in Fig. 1. More details concerning the architecture 1 are set forth in co-pending U.S. Patent Application No_________, mentioned above.

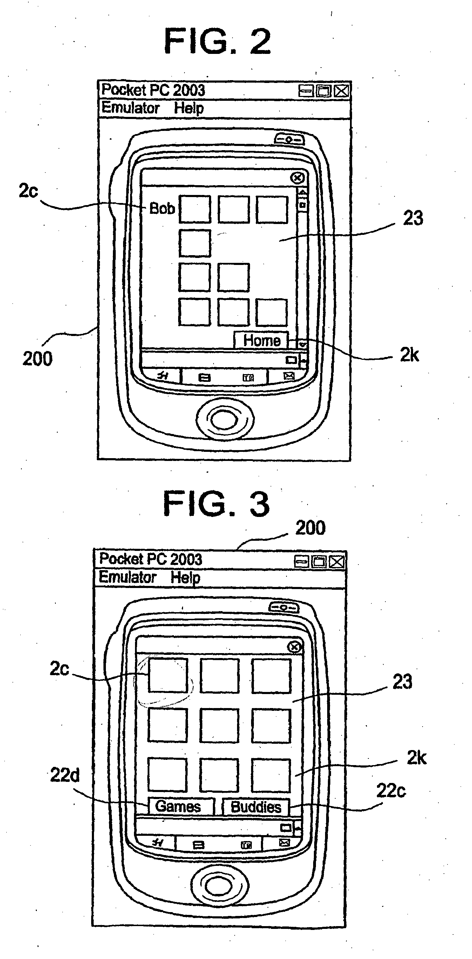

Referring now to Fig. 2, there is shown an example of a device 200 depicted in Fig. 1. The device 200 includes a client 2, application client 2a (shown in Fig. 1), and an optional display 2b. In accordance with one embodiment of the present invention, the device 200 via client 2 is operable to receive messages that are used to create or update at least one indicator, such as icon 2c. As used herein, the term "indicator" includes visual indicators, such as icons, or hard-wired depressible keys such as those found on the surface of a keyboard, as well as other types of indicators that can be seen or touched by a user in order to make a selection. In addition, the word "menu" is meant to include both menus that are displayed and those that are stored and then used to govern the operation of one or more keys absent a visual display. For ease of explanation, in the examples that follow one or more icons will be used as indicators. It is by using the icons 2c-2k (wherein "k" represents the last icon on the display 2b) in Fig 2 that a user of device 200 accesses one or more stored applications (e.g., games).

In accordance with one embodiment of the present invention, each icon 2c through 2k may be unique. For example, one icon may represent those individuals that are presently available to enter into a communications session with a user of device 200 via voice, text, video or some combination of the three. Such a session may relate to an on-line game, for example. Such an on-line game may be carried out using a wired or wireless communications channel. Thus, the components/devices shown in Figs. 1 through 4 may be wired or wireless components.

Because a user may be interested in launching many different applications and conducting many different sessions, each icon within the set of icons 2c-2k may be dedicated to a particular type of application (e.g., a particular game). Still other icons may indicate the games that a user presently plays most often, or presently subscribes to, or new games a user may choose to subscribe to, for example. All of the icons 2c through 2k may form a menu 23. More specifically, in accordance with the present invention the icons form an intuitive menu 23.

In yet additional embodiments of the present invention one or more of the icons 2c through 2k may represent those individuals the user of device 200 plays games with most often (i.e., "buddies"). Further, each icon may combine one or more features. That is, each icon may represent only those buddies that are available, but who are available to play a specific game with the user of device 200. Each such icon may represent a "group" of buddies.

Referring back to Fig.1, the client 2 may be operable to receive both signaling and information messages from the agent 3 in order to update one or more of the icons 2c through 2k. As set forth in more detail in co-pending U.S. Patent Application No., mentioned above, the agent 3 may generate these messages based on information it has collected. For example, the agent 3 may: monitor and collect patterns of usage of device 200 by its user; collect such a user's preferences; collect the presence status of the device 200 and its user; and collect the presence status of one or more other third party users (either buddies or individuals unknown to the user ("anonymous" users)), to give just a few examples of the information the agent 3 may collect in order to generate messages. The agent 3 may collect this information from the client 2, from the lobby 4 or from third party agents of other users, such as third party agent 300 shown in Fig. 1.

As will be understood by those skilled in the art, because the icons 2c through 2k may be based on usage patterns and preferences of a user, for example, each icon provides a more intuitive indicator. Together, the set of intuitive icons 2c-2k provides a more intuitive menu 23 that enables a user to more quickly launch an application and maintain a communication session. It can be said that such a menu provides a "one-touch" intuitive menu.

We will now present some additional examples of how such an intuitive menu may be used.

In a further embodiment of the present invention, the user of device 200 may select or otherwise access one of the icons 2c-2k (or depress/select a key as the case may be) in order to forward an invitation to those third party users or individuals, associated with the selected icon, to communicate with the user. This invitation may be intercepted so-to-speak or received by the agent 3 in the form of a request before it reaches an invited user. Thereafter, the agent 3 may proceed to consult stored information to determine which of the invited third party users should actually receive the invitation. For example, the agent 3 may consult the "presence status" of each of the invited users (e.g., is an invited user's device powered on?). More details of how the agent 3 (and lobby 4) process such an invitation from a client 2 or device 200 may be found in the co-pending Application mentioned above. For now, suffice it to say that once the agent 3 (and/or lobby 4) determines which third party users should actually receive the invitation, these users are sent the invitation via their respective agents, such as agent 300. The agent 3 may also forward an information message on to the client 2 to inform the user which third party users were sent the invitation, and which were not. This message may be displayed as an icon 2c-2k.

Throughout the discussion above and below, reference will be made to messages, either signaling or information messages, that are exchanged between the agent 3 and device 200. It should be understood that in most contexts, these messages are exchanged between the agent 3 and client 2 of device 200, unless otherwise noted. Furthermore, when messages are exchanged, they may be formatted as short binary messages. Such a format reduces the amount of airlink time and/or bandwidth required to exchange messages, helping a service provider that owns and/or operates the architecture 1 to conserve these valuable resources.

As mentioned above, one or more of the icons 2c-2k may represent those third party users, individually or as part of a group, that are presently available to play a game. Such an icon is made possible because the agent 3 may be operable to continuously monitor and collect the presence status of each of the third party users. When the status of a third party user changes, this information may be passed on to the user of device 200 by agent 3 using one or more messages. A message may be received by the client 2 which then updates one or more of the icons 2c-2k, etc., that represent the presence status of such a third party user. For example, an icon may indicate that the user is "unavailable". If two or more users are unavailable the status of both users may be identified within a single icon. If all of the invited users are unavailable, then an "all unavailable" indicator may be displayed. It should be understood that a given user's presence status may indicate whether the user or her associated device are active or inactive. An active device is, for example, a device that is powered-on. An active device may nonetheless become inactive if its user does not access it within a certain time period, for example, or if it is subsequently powered-off.

Up until now we have discussed the icons and menus associated with the device 200 under the assumption that the user of device 200 is the one who launches an application to initiate a communication session. In yet further embodiments of the present invention, other third party users may invite the user of device 200 to communicate with them to play an on-line game. The agent 3 associated with device 200 may receive such an invitation from the agent of a third party user. After consulting its stored information relating to the presence status of the device 200 and/or its user, the agent 3 may forward the invitation on to the device 200 if the status indicates the user/device 200 are active. If the status indicates the device 200/user are inactive, then the invitation may not be forwarded. As explained in more detail in the co-pending Application mentioned above, this ability to screen invitations/messages helps to conserve valuable airlink time/bandwidth because invitations, as well as other messages, may only be relayed on to the device 200 and its user when both are in an active state.

We now present some additional examples of specific icons which might be displayed on the display 2b of device 200. Suppose the user of device 200 enjoys playing the card game "Blackjack". Suppose further that the user usually plays this game with three other individuals known as Alice, Bob and Carol. Suppose even further that only Alice and Carol are presently available to play Blackjack with the user. In this example, one of the icons 2c through 2k would indicate the game Blackjack (e.g., using a pictorial image). In addition, this icon would only be associated with Alice and Carol because they are the only ones that are presently available to play Blackjack. Accordingly, when the user accesses or otherwise selects this icon an invitation to play Blackjack would only be sent to Alice and Carol.

In another example, suppose the user of device 200 plays a game called "Storm" often. In this instance, however, the user does not care who he plays this game with. Accordingly, in a further embodiment of the present invention, one of the icons 2c-2k may indicate the game Storm. Upon selecting this icon, an invitation may be sent out to identify any individual/third party user who is currently available to play the game Storm with the user.

It should be understood that the types of icons discussed above are just some of the many icons which can be generated and displayed on the device 200. Other icons may represent, for example, a historical record of all of the activities (e.g., games) a particular user has ever played or downloaded.

We turn now to a brief discussion of the agent 3. Again, a more detailed discussion is set forth in the co-pending Application mentioned above.

In additional embodiments of the invention, the agent 3 is operable to act as a proxy for the device 200 when the device 200 becomes inactive. Once the device 200 becomes active again, the agent 3 is further operable to forward messages to the device 200 in order to update any existing indicators/icons 2c-2k, to create new icons 2c-2k, or to otherwise pass information on to the user of device 200. More specifically, in a further embodiment of the invention, the agent 3 only forwards messages on to the device 200 when the device 200 is in an active state. For example, the agent 3 only sends messages after receiving an indication that an indicator, such as icon 2c-2k (or a key on a keyboard), has been accessed. That is, the agent 3 only sends messages when a user of the device 200 selects an icon or otherwise accesses the device 200. Said another way, the agent 3 does not continuously send messages to the device 200. This saves airlink time and bandwidth.

Referring now to Fig. 3, there is shown another example of device 200 in accordance with yet another embodiment of the present invention. As shown, the device 200 includes one or more icons 2c through 2k, one of which is a "buddies" icon 22c. By selecting this icon a buddy-based browsing menu may be quickly selected or displayed. This menu includes for example, a list of individuals that the user plays games with, or otherwise communicates with, most often. In an alternative embodiment of the present invention, this menu may only indicate those buddies that are presently available to communicate with, or otherwise play games with the user. Such a menu may be generated by using messages sent from the agent 3. After this menu is selected and the list is presented to the user, the user may quickly select those individuals from the buddy list that he intends to send an invitation to via, for example, agent 3.

In yet another embodiment of the present invention, one of the icons 2c through 2k may be an applications icon 22d (e.g., a "games" icon). By selecting this icon a list of, for example, games which are played most often by the user of device 200 is presented to the user. This list may also be generated by the agent 3.

Also mentioned briefly above was the ability to carry out communication sessions with an anonymous third party user. By anonymous is meant that the identity of the third party user is initially, and perhaps continually, unknown to the user of device 200. The way in which an anonymous third party user is selected may vary.

Initially, it may be assumed that all of the buddies or other users known to the user of device 200 are presently unavailable to play a game. In yet a further embodiment of the invention when this occurs agent 3 may communicate with the lobby 4 to identify anonymous individuals to play a game with the user. The way in which the lobby 4 may identify and then select specific, anonymous individuals are many. For example, the lobby 4 may identify anonymous individuals from one of many groups of individuals that it has stored by specific game/application.

Once identified, the lobby 4 may select one or more of the identified individuals sequentially. Alternatively, one or more of the identified individuals may be selected based on a profile which is derived from collected user preferences or patterns that the lobby 4 has stored. That is, the lobby 4 may select individuals by matching certain characteristics of the individuals' "gaming habits" with the habits of the user. For example, the lobby 4 may select those individuals whose skill level closely matches the skill level of the user of device 200. That skill level may be based on an individual's gaming history and scores achieved for a particular game, for example.

Once the lobby 4 selects individuals that are available and/or qualified to play a game with the user, the lobby 4 may then form a new group and forward the identities of the individuals on to the agent 3. Upon receipt of the anonymous individual's identities, the agent 3 may be operable to forward a request/invitation on to the agents associated with the identified individuals who then pass the invitation on to the individual themselves. The agent 3 may also be operable to forward the identities of the individuals on to the user of device 200. These identities and their new group may be represented by an icon 2c-2k. If the lobby 4 has formed a new group consisting of the identified individuals and the user, then the lobby 4, via the respective agents, may also, pass the identities of all of the identified individuals on to each member of the group.

Before going further, it should be understood that there are many messages, instructions, etc., both signaling and non-signaling, that may be exchanged between: (a) the client 2 and agent 3; (b) the agent 3 and lobby 4; (c) the client 2 and application client 2a; (d) the lobby 4 and game engine/server 5, among other messages. The details, formatting, content and structure of these messages is not needed for an understanding of the present invention. However, such a discussion is included in co-pending U.S. Patent Application No., which is incorporated herein in full as if set forth in full herein.

The type of icons/indicators that can be presented to the user via device 200 and agent 3 are endless. Some others that occur to the inventors include one or more icons that indicate the current status of an invited buddy or individual. For example, an indicator may indicate whether a buddy has answered an invitation, is currently involved in another communication activity or is currently involved in a different application/game other than the one the buddy has been invited to play. In addition, certain indicators/icons may be presented to the user when an individual involved in a session with the user has been temporarily disconnected from the session.

It should be understood that the discussion above includes just some of the examples of the present invention. The true scope of the present invention is provided by the claims which follow.

## Claims

1. A server (34) for launching a software application on a wireless user device (200), the server (34) comprising a user agent (3) operable to:
collect information regarding the wireless user device's (200) activity and preferences with respect to the usage of at least one software application via the wireless user device (200);
identify at least one usage pattern from the collected information;
identify one or more third party users matching the identified usage patterns and presently available to become involved in a communication session with the user device; and
forward a message to the wireless user device (200) to update, based on the identified usage pattern and the third party users, an indicator (2c-2k) of a menu (23) of indicators (2c - 2k) to associate the software application with the identified available third party users, such that, upon selecting the indicator, the software application is launched on the wireless user device (200) and the user agent (3) forwards an invitation to third party user agents associated with the identified third party users, wherein the third party user agents then pass the invitation to the third party users to communicate with the wireless user device (200) via said software application.

2. The server (34) as in claim 1, wherein the software application is a software game and the indicators are gaming indicators.

3. The server (34) as in claim 1, wherein the collected information comprises the type of software games played by the user.

4. The server (34) as in claim 1, wherein the collected information comprises the individuals the user plays software games with most often.

5. The server (34) as in claim 1, wherein the collected information further comprises the software games the user plays most often.

6. The server (34) as in claim 1, further operable to forward the message after receiving signals indicating that the device is active.

7. A method for launching a software application on a wireless user device (200), the method comprising:
collecting, by a user agent (3) implemented on a server (34), information regarding the wireless user device's (200) activity and preferences with respect to the usage of at least one software application via the wireless user device (200);
identifying, by the user agent (3), at least one usage pattern from the collected information;
identifying, by the user agent (3), one or more third party users matching the identified usage patterns and presently available to become involved in a communication session with the user device;
forwarding a message from the user agent (3) to the wireless user device (200) to update, based on the identified usage pattern and the third party users, an indicator (2c-2k) of a menu (23) of indicators (2c - 2k) to associate the software application with the identified available third party users; and
upon selecting the indicator,
launching the software application on the wireless user device (200); and
forwarding an invitation from the user agent (3) to third party user agents (300) associated with the identified third party users; and
passing the invitation from the third party user agents (300) to the third party users to communicate with the wireless user device (200) via said software application.

## Patentansprüche

1. Server (34) zum Starten einer Softwareanwendung auf einer drahtlosen Benutzervorrichtung (200), wobei der Server (34) einen Benutzeragenten (3) umfasst, der für Folgendes betriebsbereit ist:
Sammeln von Informationen bezüglich der Aktivität und Präferenzen der drahtlosen Benutzervorrichtung (200) hinsichtlich der Nutzung von mindestens einer Softwareanwendung durch die drahtlose Benutzervorrichtung (200);
Identifizieren von mindestens einem Nutzverhalten von den gesammelten Informationen;
Identifizieren von einem oder mehreren Drittnutzern, die auf die identifizierten Nutzverhalten passen und aktuell verfügbar sind, um in eine Kommunikationssitzung mit der Benutzervorrichtung involviert zu werden; und
Weiterleiten einer Nachricht an die drahtlose Benutzervorrichtung (200) zum Aktualisieren, basierend auf dem identifizierten Nutzverhalten und den Drittnutzern, einem Indikator (2c-2k) eines Menüs (23) an Indikatoren (2c-2k), um die Softwareanwendung mit den identifizierten verfügbaren Drittnutzern zu verbinden, sodass bei der Auswahl des Indikators die Softwareanwendung auf der drahtlosen Benutzervorrichtung (200) gestartet wird und der Benutzeragent (3) eine Einladung an die Agenten der Drittnutzer weiterleitet, die mit den identifizierten Drittnutzern verbunden sind, wobei die Agenten der Drittnutzer dann die Einladung an die Drittnutzer weitergeben, um mit der drahtlosen Benutzervorrichtung (200) über die besagte Softwareanwendung zu kommunizieren.

2. Server (34) nach Anspruch 1, wobei die Softwareanwendung ein Softwarespiel und die Indikatoren Spieleindikatoren sind.

3. Server (34) nach Anspruch 1, wobei die gesammelten Informationen die Art der vom Nutzer gespielten Softwarespiele umfassen.

4. Server (34) nach Anspruch 1, wobei die gesammelten Informationen die Einzelpersonen umfassen, mit denen die Nutzer am häufigsten Softwarespiele spielen.

5. Server (34) nach Anspruch 1, wobei die gesammelten Informationen weiterhin die Softwarespiele umfassen, welche die Nutzer am häufigsten spielen.

6. Server (34) nach Anspruch 1, weiterhin fähig, eine Nachricht nach dem Empfang von Signalen weiterzuleiten, welche darauf hinweisen, dass das Gerät aktiv ist.

7. Verfahren zum Starten einer Softwareanwendung auf einer drahtlosen Benutzervorrichtung (200), wobei das Verfahren Folgendes umfasst:
Sammeln, durch einen auf einem Server (34) laufenden Benutzeragenten (3), von Informationen bezüglich der Aktivität und Präferenzen der drahtlosen Benutzervorrichtung (200) hinsichtlich der Nutzung von mindestens einer Softwareanwendung durch die drahtlose Benutzervorrichtung (200);
Identifizieren, durch den Benutzeragenten (3), von mindestens einem Nutzverhalten aus den gesammelten Informationen;
Identifizieren, durch den Benutzeragenten (3), von einem oder mehreren Drittnutzern, die auf die identifizierten Nutzverhalten passen und aktuell verfügbar sind, um in eine Kommunikationssitzung mit der Benutzervorrichtung involviert zu werden;
Weiterleiten einer Nachricht vom Benutzeragenten (3) an die drahtlose Benutzervorrichtung (200) zum Aktualisieren, basierend auf dem identifizierten Nutzverhalten und den Drittnutzern, eines Indikators (2c-2k) eines Menüs (23) an Indikatoren (2c-2k), um die Softwareanwendung mit den identifizierten verfügbaren Drittnutzern zu verbinden; und
nach Auswählen des Indikators,
Starten der Softwareanwendung auf der drahtlosen Benutzervorrichtung (200); und
Weiterleiten einer Einladung des Benutzeragenten (3) an die Agenten der Drittnutzer (300), die mit den identifizierten Drittnutzern verbunden sind; und
Weitergabe der Einladung von den Agenten (300) der Drittnutzer an die Drittnutzer, um mit der drahtlosen Benutzervorrichtung (200) über die besagte Softwareanwendung zu kommunizieren.

## Revendications

1. Serveur (34) pour lancer une application logicielle sur un dispositif utilisateur sans fil (200), le serveur (34) comprenant un agent utilisateur (3) permettant :
de collecter des informations concernant l'activité et les préférences du dispositif utilisateur sans fil (200) par rapport à l'utilisation d'au moins une application logicielle par l'intermédiaire du dispositif utilisateur sans fil (200) ;
d'identifier au moins un profil d'utilisation à partir des informations collectées ;
d'identifier un ou plusieurs utilisateurs tiers correspondant aux profils d'utilisation identifiés et actuellement disponibles pour participer à une session de communication avec le dispositif utilisateur ; et
de transférer un message au dispositif utilisateur sans fil (200) pour mettre à jour, sur la base du profil d'utilisation identifié et des utilisateurs tiers, un indicateur (2c à 2k) d'un menu (23) d'indicateurs (2c à 2k) pour associer l'application logicielle aux utilisateurs tiers disponibles identifiés, de sorte que, lors de la sélection de l'indicateur, l'application logicielle soit lancée sur le dispositif utilisateur sans fil (200) et que l'agent utilisateur (3) transfère une invitation aux agents utilisateurs tiers associés aux utilisateurs tiers identifiés, dans lequel les agents utilisateurs tiers acheminent alors l'invitation vers les utilisateurs tiers pour communiquer avec le dispositif utilisateur sans fil (200) par l'intermédiaire de ladite application logicielle.

2. Serveur (34) selon la revendication 1, dans lequel l'application logicielle est un jeu vidéo et les indicateurs sont des indicateurs de jeu.

3. Serveur (34) selon la revendication 1, dans lequel les informations collectées comprennent le type de jeux vidéo joués par l'utilisateur.

4. Serveur (34) selon la revendication 1, dans lequel les informations collectées comprennent les individus avec lesquels l'utilisateur joue aux jeux vidéo le plus souvent.

5. Serveur (34) selon la revendication 1, dans lequel les informations collectées comprennent en outre les jeux vidéo auxquels l'utilisateur joue le plus souvent.

6. Serveur (34) selon la revendication 1, permettant en outre de transférer le message après avoir reçu des signaux indiquant que le dispositif est actif.

7. Procédé pour lancer une application logicielle sur un dispositif utilisateur sans fil (200), le procédé comprenant les étapes suivantes :
collecter, au moyen d'un agent utilisateur (3) mis en oeuvre sur un serveur (34), des informations concernant l'activité et les préférences du dispositif utilisateur sans fil (200) par rapport à l'utilisation d'au moins une application logicielle par l'intermédiaire du dispositif utilisateur sans fil (200) ;
identifier, au moyen de l'agent utilisateur (3), au moins un profil d'utilisation à partir des informations collectées ;
identifier, au moyen de l'agent utilisateur (3), un ou plusieurs utilisateurs tiers correspondant aux profils d'utilisation identifiés et actuellement disponibles pour participer à une session de communication avec le dispositif utilisateur ; et
transférer un message à partir de l'agent utilisateur (3) vers le dispositif utilisateur sans fil (200) pour mettre à jour, sur la base du profil d'utilisation identifié et des utilisateurs tiers, un indicateur (2c à 2k) d'un menu (23) d'indicateurs (2c à 2k) pour associer l'application logicielle aux utilisateurs tiers disponibles identifiés ; et
lors de la sélection de l'indicateur,
lancer l'application logicielle sur le dispositif utilisateur sans fil (200) ; et
transférer une invitation à partir de l'agent utilisateur (3) vers des agents utilisateurs tiers (300) associés aux utilisateurs tiers identifiés ; et
acheminer l'invitation à partir des agents utilisateurs tiers (300) vers les utilisateurs tiers pour communiquer avec le dispositif utilisateur sans fil (200) par l'intermédiaire de ladite application logicielle.
